# EUROPEAN PATENT APPLICATION

(11) **EP 4 516 434 A1**
(43) Date of publication of application: **05.03.2025**
(21) Application number: 24809192.8
(22) Date of filing: 04.06.2024
(51) Int. Cl.: B23B 11/00, B23K 26/21, B23K 26/34, B23P 23/02, B33Y 10/00, B33Y 30/00

(54) **MACHINING METHOD, MACHINING DEVICE, AND MACHINING PROGRAM**

(30) Priority: 09.06.2023 JP 2023095330
(71) Applicant: DMG MORI CO., LTD., Yamatokoriyama-shi Nara 639-1160 (JP)
(72) Inventor: ODA, Yohei, Yamatokoriyama-shi Nara 639-1160 (JP); MORI, Takanori, Yamatokoriyama-shi Nara 639-1160 (JP)
(74) Representative: Isarpatent
(86) International application number: PCT/JP2024/020428
(87) International publication number: WO 2024/253102

(57) **Abstract**

A machining method includes a step of causing a workpiece spindle (22) to rotate a workpiece (W); and a step of performing simultaneous machining in which additive manufacturing performed by a laser head (140) and turning performed by a tool (T) are performed simultaneously on the rotating workpiece (W). The simultaneous machining is performed in a state in which an additive manufacturing point (LP), at which the laser head (140) performs additive manufacturing on the workpiece, and a turning point (TP), at which the tool (T) performs turning on the workpiece, are separated by a predetermined distance or more in a rotation axis direction of the workpiece spindle (22) while the laser head (140) and the tool (T) are fed to one side in the rotation axis direction.

## Description

### Technical Field

The present disclosure relates to a machining method for machining a workpiece, a machining apparatus for machining a workpiece, and a machining program for machining a workpiece.

### Background Art

JP 2022-041603 (Patent Document 1) discloses a processing machine provided with an additive manufacturing head and a tool rest for performing turning. The processing machine is capable of performing additive manufacturing on a workpiece and turning on the workpiece in a single machine.

### Citation List

### Patent Document

Patent Document 1: JP 2022-041603A

### Summary of Invention

### Technical Problem

There is desire for a technique for simultaneously performing additive manufacturing and turning in order to increase the efficiency of machining a workpiece.

Patent Document 1 does not disclose that additive manufacturing and turning are performed simultaneously.

The present invention has been made in view of the above-described problems, and an object of an aspect of the present invention is to provide a technique for simultaneously performing additive manufacturing and turning.

### Solution to Problem

In an example of the present disclosure, a machining method for machining a workpiece by a machining apparatus is provided. The machining apparatus includes: a workpiece spindle configured to drive the workpiece to rotate; a laser head configured to supply a powder material to the workpiece and perform additive manufacturing by irradiating the workpiece with a laser beam; and a tool rest configured to hold a tool. The machining method includes a step of causing the workpiece spindle to rotate the workpiece; and a step of performing simultaneous machining in which additive manufacturing performed by the laser head and turning performed by the tool are performed simultaneously on the rotating workpiece. The simultaneous machining is performed in a state in which an additive manufacturing point, at which the laser head performs additive manufacturing on the workpiece, and a turning point, at which the tool performs turning on the workpiece, are separated by a predetermined distance or more in a rotation axis direction of the workpiece spindle while the laser head and the tool are fed to one side in the rotation axis direction.

In an example of the present disclosure, the simultaneous machining is performed in a state in which the additive manufacturing point precedes the turning point on the one side.

In an example of the present disclosure, the simultaneous machining is performed in a state in which the turning point precedes the additive manufacturing point on the one side.

In an example of the present disclosure, the additive manufacturing point, a rotation center of the workpiece, and the turning point are arranged in the order of the additive manufacturing point, the rotation center of the workpiece, and the turning point in the stated order when viewed from the rotation axis direction.

In an example of the present disclosure, the machining apparatus further includes a discharge mechanism configured to discharge a fluid onto the workpiece. The simultaneous machining is performed while the fluid is being discharged onto the workpiece.

In an example of the present disclosure, the fluid is air or a coolant.

In an example of the present disclosure, the simultaneous machining is performed in a state in which the additive manufacturing point precedes a discharge point of the fluid discharged onto the workpiece on the one side, and the discharge point precedes the turning point on the one side.

In another example of the present disclosure, a machining apparatus for machining a workpiece is provided. The machining apparatus includes: a workpiece spindle configured to drive the workpiece to rotate; a laser head configured to supply a powder material to the workpiece and perform additive manufacturing by irradiating the workpiece with a laser beam; a tool rest configured to hold a tool; and a control unit configured to control the machining apparatus. The control unit is further configured to execute processing of causing the workpiece spindle to rotate the workpiece, and processing of performing simultaneous machining in which additive manufacturing performed by the laser head and turning performed by the tool are performed simultaneously on the rotating workpiece. The simultaneous machining is performed in a state in which an additive manufacturing point, at which the laser head performs additive manufacturing on the workpiece, and a turning point, at which the tool performs turning on the workpiece, are separated by a predetermined distance or more in a rotation axis direction of the workpiece spindle while the laser head and the tool are fed to one side in the rotation axis direction.

In another example of the present disclosure, a machining program for machining a workpiece to be executed by a machining apparatus is provided. The machining apparatus includes: a workpiece spindle configured to drive the workpiece to rotate; a laser head configured to supply a powder material to the workpiece and perform additive manufacturing by irradiating the workpiece with a laser beam; and a tool rest configured to hold a tool. The machining program causes the machining apparatus to execute a step of causing the workpiece spindle to rotate the workpiece; and a step of performing simultaneous machining in which additive manufacturing performed by the laser head and turning performed by the tool are performed simultaneously on the rotating workpiece. The simultaneous machining is performed in a state in which an additive manufacturing point, at which the laser head performs additive manufacturing on the workpiece, and a turning point, at which the tool performs turning on the workpiece, are separated by a predetermined distance or more in a rotation axis direction of the workpiece spindle while the laser head and the tool are fed to one side in the rotation axis direction.

These and other objects, features, aspects, and advantages of the present invention will become apparent from the following detailed description of the invention, taken in conjunction with the accompanying drawings.

### Brief Description of Drawings

FIG. 1 is a diagram showing an example of the appearance of a machining apparatus.
FIG. 2 is a diagram showing an example of an apparatus configuration of the machining apparatus.
FIG. 3 is a diagram showing a cross section of a laser head during additive manufacturing.
FIG. 4 is a diagram schematically showing a simultaneous machining mode from an X-axis direction.
FIG. 5 is a diagram schematically showing a simultaneous machining mode from a Z-axis direction.
FIG. 6 is a diagram showing an example of a drive mechanism of the machining apparatus.
FIG. 7 is a diagram showing an example of a hardware configuration of a control unit.
FIG. 8 is a flowchart showing a flow of processing related to simultaneous machining shown in FIG. 4.
FIG. 9 is a diagram schematically showing a simultaneous machining mode according to Variation 1.
FIG. 10 is a flowchart showing a flow of processing related to simultaneous machining according to Variation 1.
FIG. 11 is a diagram schematically showing a simultaneous machining mode according to Variation 3.

### Description of Embodiments

Hereinafter, embodiments of the present invention will be described with reference to the drawings. In the following description, parts and constituent elements that are the same are denoted by the same reference numerals. They also have the same names and functions. Therefore, detailed description thereof will not be repeated. Note that the embodiments and the variations described below may be selectively combined as appropriate.

### <A. Appearance of machining apparatus 100>

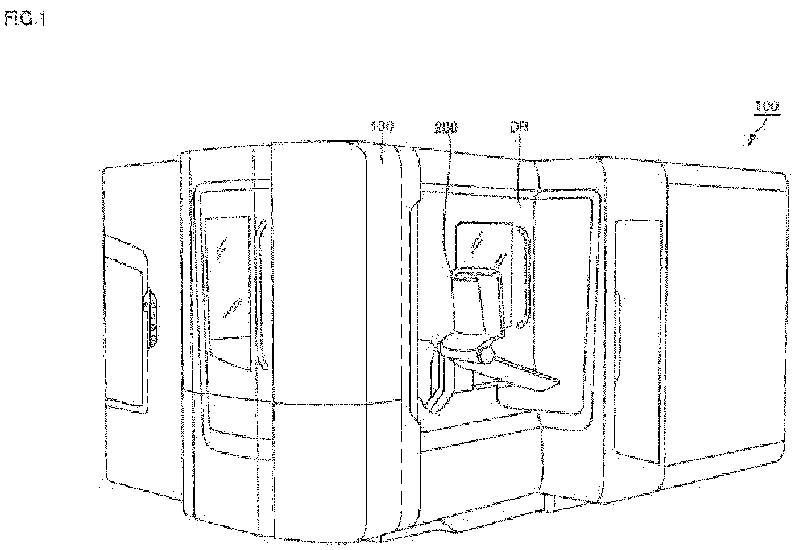

First, a machining apparatus 100 according to an embodiment will be described with reference to FIG. 1. FIG. 1 is a diagram showing an example of the appearance of the machining apparatus 100.

The machining apparatus 100 is an AM/SM hybrid processing machine capable of performing additive manufacturing (AM) on a workpiece and subtractive manufacturing (SM) on a workpiece. Examples of a subtractive manufacturing function includes a milling function and a turning function.

The machining apparatus 100 includes, for example, a cover body 130 and an operation panel 200.

The cover body 130 is a mechanism for protecting parts provided inside the machining apparatus 100. The cover body 130 is provided with a door DR. The door DR is, for example, a sliding door. The door DR may be configured to be openable and closable by a drive source such as a motor, or may be configured to be openable and closable manually.

The operation panel 200 is a general-purpose computer and has a display for displaying various types of information regarding machining. The display is, for example, a liquid crystal display, an organic EL (Electro Luminescence) display, or another type of display device. The display also includes a touch panel and receives various operations performed on the machining apparatus 100 through touch operations.

### <B. Apparatus configuration of machining apparatus 100>

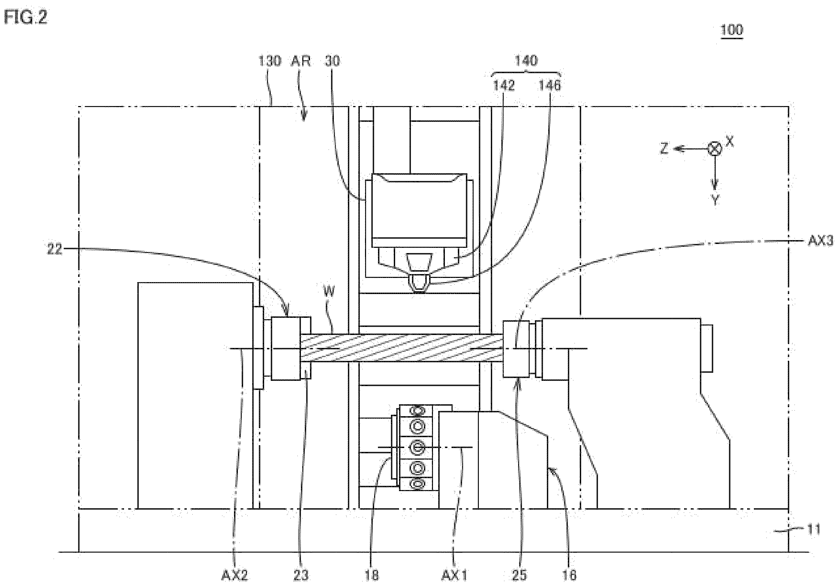

Next, an apparatus configuration of the machining apparatus 100 will be described with reference to FIG. 2. FIG. 2 is a diagram showing an example of the apparatus configuration of the machining apparatus 100.

As described above, the machining apparatus 100 includes the cover body 130. The cover body 130 forms the appearance of the machining apparatus 100, and defines a machining area AR for performing additive manufacturing on a workpiece W.

The machining apparatus 100 includes a bed 11, a tool rest 16, a workpiece spindle 22, a tailstock 25, a tool spindle 30, and a laser head 140.

For convenience in the description, the rotation axis direction of the workpiece spindle 22 will also be referred to as the "Z-axis direction" below. The Z-axis direction is parallel to axes AX1 to AX3 shown in FIG. 2. Also, the direction orthogonal to the Z-axis direction on the horizontal plane will also be referred to as the "X-axis direction". The direction orthogonal to both the X-axis direction and the Z-axis direction will also be referred to as the "Y-axis direction". In the example shown in FIG. 2, the Y-axis direction corresponds to the gravitational direction.

The bed 11 is a base member for supporting various apparatuses provided inside the machining apparatus 100. In the example shown in FIG. 2, the bed 11 supports the tool rest 16, the workpiece spindle 22, the tailstock 25, the tool spindle 30, and the laser head 140. The bed 11 is placed on the floor of a factory or the like. The bed 11 is made of metal such as cast iron.

The tool rest 16 has a turret 18. The turret 18 is configured to be rotatable around the axis AX1. The turret 18 holds a plurality of tools spaced apart in the circumferential direction around the axis AX1. Also, the tool rest 16 is configured to be movable in the X-axis direction and the Y-axis direction by various drive mechanisms such as a motor. The tool rest 16 performs turning by bringing a fixed tool held by the turret 18 into contact with the workpiece W rotated by the workpiece spindle 22.

The workpiece spindle 22 is configured to be rotatable while holding the workpiece W. More specifically, the workpiece spindle 22 is provided with a chuck mechanism 23. The chuck mechanism 23 is a mechanism for fixing the workpiece W to the workpiece spindle 22. Also, the workpiece spindle 22 is configured to be rotatable around the axis AX2 extending along its axial direction.

The tailstock 25 is configured to be movable in the axis AX3 by various drive mechanisms such as a motor. As a result, the tailstock 25 supports an elongate workpiece W from the side opposite to the workpiece spindle 22. Typically, the axis AX3 is coaxial with the axis AX2. Also, the tailstock 25 is configured to be rotatable around the axis AX3.

The tool spindle 30 is provided, for example, at a position higher than the workpiece spindle 22 and the tailstock 25. Also, the tool spindle 30 is configured to allow a tool or the laser head 140 to be detachably attached. FIG. 2 shows an example in which the laser head 140 is attached to the tool spindle 30.

The laser head 140 can be attached to and detached from the tool spindle 30 by, for example, an ATC (Automatic Tool Changer). The machining apparatus 100 attaches the laser head 140 to the tool spindle 30 when performing additive manufacturing on the workpiece W. On the other hand, the machining apparatus 100 attaches a tool to the tool spindle 30 when performing subtractive manufacturing on the workpiece W.

Examples of subtractive manufacturing include milling, in which a rotating tool is brought into contact with the workpiece W fixed to the workpiece spindle 22. Other examples of subtractive manufacturing include turning, in which a tool is pressed against a workpiece W rotating around the axis AX2.

The laser head 140 performs additive manufacturing through DED (Direct Energy Deposition) while attached to the tool spindle 30. The laser head 140 has a head body 142 and a laser nozzle 146 as a mechanism for realizing additive manufacturing.

A powder material is supplied to the head body 142 via a cable (not shown). The supplied powder material may be metal powder, resin powder, or any other type of powder that melts when irradiated with a laser beam.

The laser nozzle 146 irradiates the workpiece W with the laser beam and determines an irradiation region of the workpiece W irradiated with the laser beam. The powder material supplied to the laser head 140 is discharged to the workpiece W through the laser nozzle 146.

### <C. Additive manufacturing>

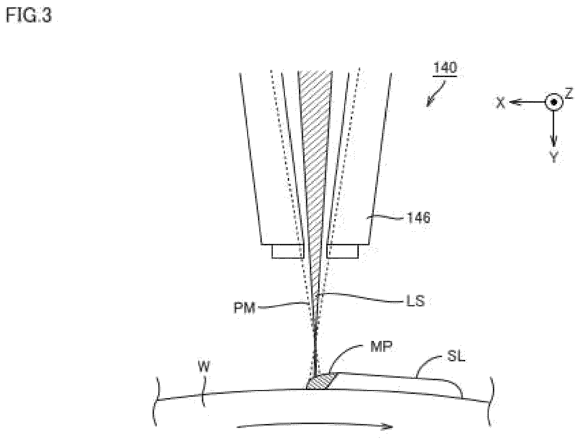

Next, additive manufacturing performed by the laser head 140 will be described in detail with reference to FIG. 3. FIG. 3 is a diagram showing a cross section of the laser head 140 during additive manufacturing.

The machining apparatus 100 can realize various types of additive manufacturing by controlling the laser head 140. Examples of types of additive manufacturing include lamination and coating. Lamination is a process in which layers SL are stacked on a workpiece W. Coating is a process in which the surface of a workpiece W is covered with a layer SL.

The machining apparatus 100 according to an embodiment is configured to be able to realize high-speed additive manufacturing. Examples of high-speed additive manufacturing technology include EHLA (Extreme High-speed Laser Application).

In more detail, the laser head 140 irradiates the rotating workpiece W with a laser beam LS while moving in the axial direction of the workpiece spindle 22 (i.e., the Z-axis direction). As a result, a portion irradiated with the laser beam LS melts, and a molten pool MP is formed on the workpiece W.

The laser head 140 supplies a powder material PM to the workpiece W in parallel with irradiation with the laser beam LS. The supplied powder material PM is melted by the laser beam LS before it reaches the surface of the workpiece W. As a result, the molten powder material PM is introduced into the molten pool MP. When the molten pool MP is hardened on the workpiece W, it becomes a layer SL.

### <D. Simultaneous machining>

The machining apparatus 100 rotates the workpiece W at high speed during high-speed additive manufacturing. Thus, the machining apparatus 100 is capable of performing turning on the workpiece W in parallel with additive manufacturing on the workpiece W. Hereinafter, machining in which additive manufacturing is performed on the workpiece W and turning is performed on the workpiece W simultaneously is also referred to as "simultaneous machining".

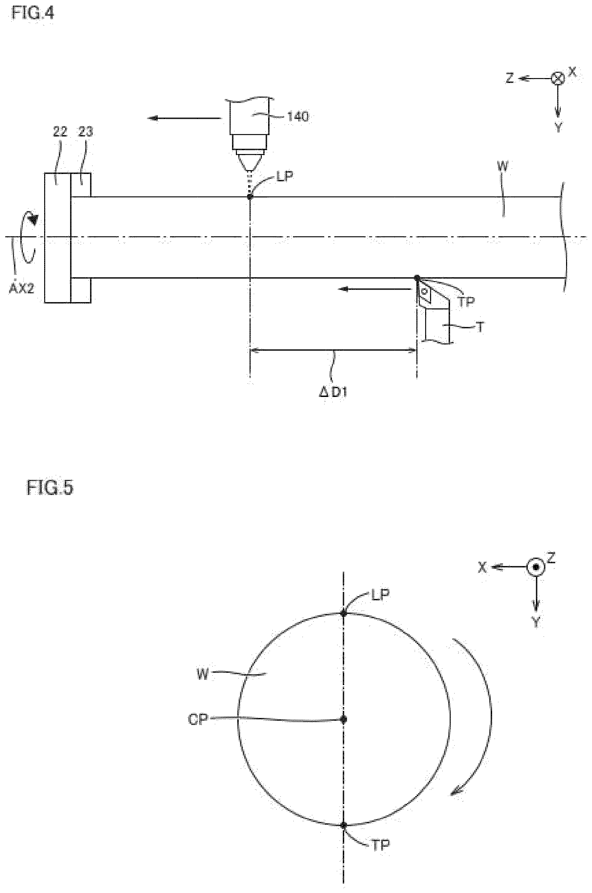

Simultaneous machining performed by the machining apparatus 100 will be described with reference to FIGS. 4 and 5. FIG. 4 is a diagram schematically showing a simultaneous machining mode from the X-axis direction. FIG. 5 is a diagram schematically showing a simultaneous machining mode from the Z-axis direction.

FIG. 4 shows the laser head 140 performing additive manufacturing on the workpiece W and a tool T performing turning on the workpiece W. The tool T is fixed to the tool rest 16 (see FIG. 2) via the above-described turret 18.

The machining apparatus 100 simultaneously performs additive manufacturing by the laser head 140 and turning by the tool T on the rotating workpiece W. At this time, the machining apparatus 100 performs simultaneous machining in a state in which an additive manufacturing point LP, at which the laser head 140 performs additive manufacturing on the workpiece W, and a turning point TP, at which the tool T performs turning on the workpiece W, are separated by a predetermined distance ΔD1 or more in the Z-axis direction while the laser head 140 and the tool T are driven to one side in the Z-axis direction.

The additive manufacturing point LP corresponds to a position where the laser head 140 irradiates the workpiece W with a laser beam. The turning point TP corresponds to a position where the workpiece W is subjected to turning performed by the tool T. In other words, the turning point TP corresponds to a point of contact between the tool T and the workpiece W.

In the example shown in FIG. 4, the machining apparatus 100 performs simultaneous machining in a state in which the additive manufacturing point LP precedes the turning point TP in the direction in which the laser head 140 and the tool T are fed. As a result, any portion on the workpiece W is machined in the order of "additive manufacturing → turning". Typically, the feed rate of the laser head 140 is the same as the feed rate of the tool T.

The additive manufacturing point LP will have a high temperature. Thus, if turning is performed immediately on a portion that has been subjected to additive manufacturing, the tool T will be worn out due to heat. Further, the workpiece W expands at high temperatures. If turning is performed on the expanded workpiece W, it will be difficult to control its dimensions, and desired machining accuracy may not be obtained.

In view of this, the machining apparatus 100 according to this embodiment performs simultaneous machining in a state in which the additive manufacturing point LP is separated from the turning point TP by a distance ΔD1 or more. Thus, the machining apparatus 100 is capable of performing turning after the temperature of the workpiece W has decreased. As a result, the machining apparatus 100 is capable of suppressing wear of the tool T due to heat. The machining apparatus 100 is capable of performing turning when the workpiece W is not expanded, and can avoid a decrease in machining accuracy.

Preferably, the additive manufacturing point LP, the rotation center CP of the workpiece W, and the turning point TP are arranged in the order of the additive manufacturing point LP, the rotation center CP of the workpiece W, and the turning point TP in the stated order when viewed from the Z-axis direction. In other words, the rotation center CP of the workpiece W is located between the additive manufacturing point LP and the turning point TP in a direction orthogonal to the Z-axis direction. In the example shown in FIG. 5, the additive manufacturing point LP, the rotation center CP of the workpiece W, and the turning point TP are on a straight line when viewed from the Z-axis direction. That is, additive manufacturing is performed from one side in the Y-axis direction during simultaneous machining, and turning is performed from the other side in the Y-axis direction during simultaneous machining.

Typically, the additive manufacturing point LP is located at an uppermost portion of the workpiece W when viewed in the Z-axis direction. On the other hand, the turning point TP is located at a lowermost portion of the workpiece W when viewed in the Z-axis direction. As a result of additive manufacturing and turning being performed on opposite sides of the workpiece W, the machining apparatus 100 can prevent one of additive manufacturing and turning from affecting machining accuracy of the other of additive manufacturing and turning.

### <E. Drive mechanism of machining apparatus 100>

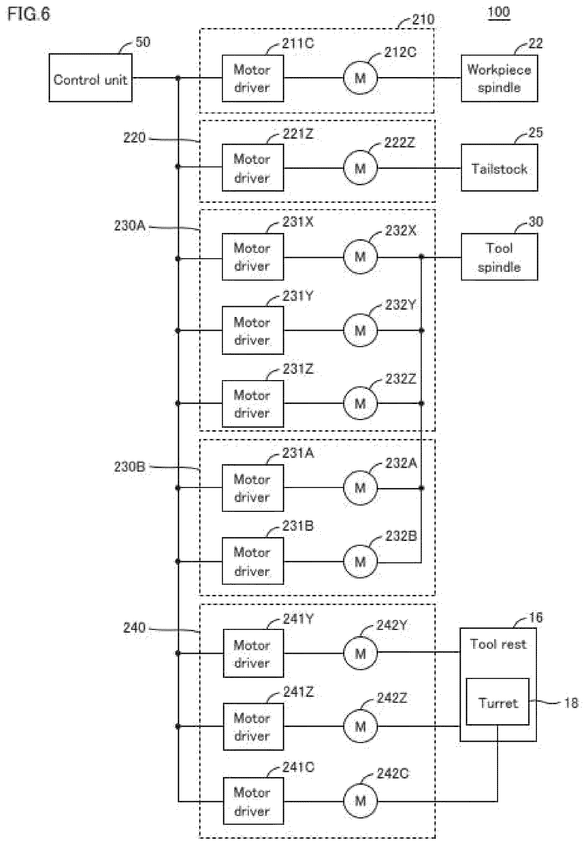

Next, a drive mechanism of the machining apparatus 100 will be described with reference to FIG. 6. FIG. 6 is a diagram showing an example of the drive mechanism of the machining apparatus 100.

As shown in FIG. 6, the machining apparatus 100 includes a control unit 50, drive units 210, 220, 230A, 230B, and 240.

The control unit 50 controls various apparatuses in the machining apparatus 100. The control unit 50 may have any device configuration. The control unit 50 may be constituted by a single control unit, or may be constituted by a plurality of control units. In one example, the control unit 50 includes at least one of a CNC (Computer Numerical Control) and a PLC (Programmable Logic Controller).

The drive unit 210 is a drive mechanism for driving the workpiece spindle 22 to rotate. The drive unit 210 may be constituted by a single drive unit, or may be constituted by a plurality of drive units. In the example shown in FIG. 6, the drive unit 210 is constituted by a motor driver 211C and a motor 212C.

The motor driver 211C successively receives input of target rotation angles or target rotation speeds of the workpiece spindle 22 from the control unit 50, and outputs a current according to the target rotation angles or the target rotation speeds to the motor 212C. As a result, the workpiece held by the workpiece spindle 22 rotates around the Z-axis direction as the rotation center. The motor 212C may be an AC motor, may be a stepping motor, may be a servo motor, or may be another type of motor.

The drive unit 220 is a drive mechanism for driving the tailstock 25. The drive unit 220 may be constituted by a single drive unit, or may be constituted by a plurality of drive units. In the example shown in FIG. 6, the drive unit 220 is constituted by a motor driver 221Z and a motor 222Z.

The motor driver 221Z successively receives input of target positions regarding the workpiece spindle 22 from the control unit 50, and outputs a current according to the target positions to the motor 222Z. As a result, the motor 222Z moves the tailstock 25 to any position in the Z-axis direction. The motor 222Z may be an AC motor, may be a stepping motor, may be a servo motor, or may be another type of motor.

The drive unit 230A is a drive mechanism for moving the position of the tool spindle 30. The above-described laser head 140 is driven by being attached to the tool spindle 30. The drive unit 230A may be constituted by a single drive unit, or may be constituted by a plurality of drive units. In the example shown in FIG. 6, the drive unit 230A is constituted by motor drivers 231X to 231Z and motors 232X to 232Z.

The motor driver 231X successively receives input of the target positions of the tool spindle 30 in the X-axis direction from the control unit 50, and outputs a current according to the target positions to the motor 232X. As a result, the motor 232X drives the tool spindle 30 to any position in the X-axis direction. The motor 232X may be an AC motor, may be a stepping motor, may be a servo motor, or may be another type of motor.

The motor driver 231Y successively receives input of the target positions of the tool spindle 30 in the Y-axis direction from the control unit 50, and outputs a current according to the target positions to the motor 232Y. As a result, the motor 232Y drives the tool spindle 30 to any position in the Y-axis direction. The motor 232Y may be an AC motor, may be a stepping motor, may be a servo motor, or may be another type of motor.

The motor driver 231Z successively receives input of the target positions of the tool spindle 30 in the Z-axis direction from the control unit 50, and outputs a current according to the target positions to the motor 232Z. As a result, the motor 232Z moves the tool spindle 30 to any position in the Z-axis direction. The motor 232Z may be an AC motor, may be a stepping motor, may be a servo motor, or may be another type of motor.

The drive unit 230B is a drive mechanism for driving the tool spindle 30 to rotate. The drive unit 230B may be constituted by a single drive unit, or may be constituted by a plurality of drive units. In the example shown in FIG. 6, the drive unit 230B is constituted by motor drivers 231A and 231B and motors 232A and 232B.

The motor driver 231A successively receives, from the control unit 50, input of target rotation angles or target rotation speeds of the tool spindle 30 around the X-axis direction, and outputs a current according to the target rotation angles or the target rotation speeds to the motor 232A. The motor 232A drives the tool spindle 30 to rotate around the X-axis direction. The motor 232A may be an AC motor, may be a stepping motor, may be a servo motor, or may be another type of motor.

The motor driver 231B successively receives, from the control unit 50, input of target rotation angles or target rotation speeds of the tool spindle 30 with the axial direction of the tool spindle 30 as the rotation center, and outputs a current according to the target rotation angles or the target rotation speeds to the motor 232B. The motor 232B drives the tool spindle 30 to rotate around the axial direction of the tool spindle 30 as the rotation center. The motor 232B may be an AC motor, may be a stepping motor, may be a servo motor, or may be another type of motor.

The drive unit 240 is a drive mechanism for driving the tool rest 16 and the turret 18. The drive unit 240 may be constituted by a single drive unit, or may be constituted by a plurality of drive units. In the example shown in FIG. 6, the drive unit 240 is constituted by motor drivers 241C, 241Y, and 241Z and motors 242C, 242Y, and 242Z.

The motor driver 241C successively receives input of target values for the rotation angle of the turret 18 around the Z-axis direction, and outputs a current according to the target values to the motor 242C. As a result, the motor driver 241C controls the rotation angle of the turret 18 around the Z-axis direction as the rotation center. The motor 242C may be an AC motor, may be a stepping motor, may be a servo motor, or may be another type of motor.

The motor driver 241Y successively receives input of the target positions of the tool rest 16 in the Y-axis direction from the control unit 50, and outputs a current according to the target positions to the motor 242Y. As a result, the motor 242Y moves the tool rest 16 to any position in the Y-axis direction. The motor 242Y may be an AC motor, may be a stepping motor, may be a servo motor, or may be another type of motor.

The motor driver 241Z successively receives input of the target positions of the tool rest 16 in the Z-axis direction from the control unit 50, and outputs a current according to the target positions to the motor 242Z. As a result, the motor 242Z moves the tool rest 16 to any position in the Z-axis direction. The motor 242Z may be an AC motor, may be a stepping motor, may be a servo motor, or may be another type of motor.

### <F. Hardware configuration of control unit 50>

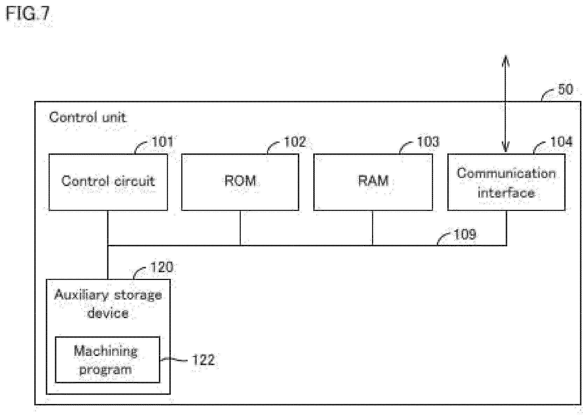

Next, the hardware configuration of the control unit 50 shown in FIG. 6 will be described with reference to FIG. 7. FIG. 7 is a diagram showing an example of the hardware configuration of the control unit 50.

As described above, the control unit 50 may be a CNC or a PLC. FIG. 7 shows the hardware configuration of the control unit 50 as a CNC.

The control unit 50 includes, for example, a control circuit 101, a ROM (Read Only Memory) 102, a RAM (Random Access Memory) 103, a communication interface 104, and an auxiliary storage device 120. These components are connected to an internal bus 109.

The control circuit 101 is constituted by, for example, at least one integrated circuit. The integrated circuit may be constituted by, for example, at least one CPU (Central Processing Unit), at least one GPU (Graphics Processing Unit), at least one ASIC (Application Specific Integrated Circuit), at least one FPGA (Field Programmable Gate Array), or a combination of them.

The control circuit 101 controls the operation of the control unit 50 by executing various programs, such as a machining program 122. The machining program 122 is a program for realizing various processes mentioned in this specification. Upon receiving an execution command for the machining program 122, the control circuit 101 reads the machining program 122 from the ROM 102 to the RAM 103. The RAM 103 functions as a working memory and temporarily stores various types of data necessary for executing the machining program 122.

The communication interface 104 is an interface for realizing communication with various devices. The machining apparatus 100 communicates, for example, via the communication interface 104, with various drive units (e.g., the above-described drive units 210, 220, 230A, 230B, 240, and the like) for realizing additive manufacturing of a workpiece.

The auxiliary storage device 120 is a storage medium such as a hard disk or a flash memory, for example. The auxiliary storage device 120 stores the machining program 122 and the like. The machining program 122 is not limited to being stored in the auxiliary storage device 120, and can also be stored in a storage area (e.g., a cache memory) of the control circuit 101, the ROM 102, the RAM 103, an external device (e.g., a server), or the like.

Furthermore, rather than being a standalone program, the machining program 122 may be provided as part of a program. In this case, various types of processing pertaining to the present embodiment are realized in cooperation with the program. Even in the case of such a program that does not include some of the modules, it does not depart from the spirit of the machining program 122 pertaining to the present embodiment. Also, some or all of the functions provided by the machining program 122 may be realized by dedicated hardware. Furthermore, the control unit 50 may be formed as a so-called cloud service in which at least one server performs a part of the processing of the machining program 122.

### <G. Flow of controlling simultaneous machining>

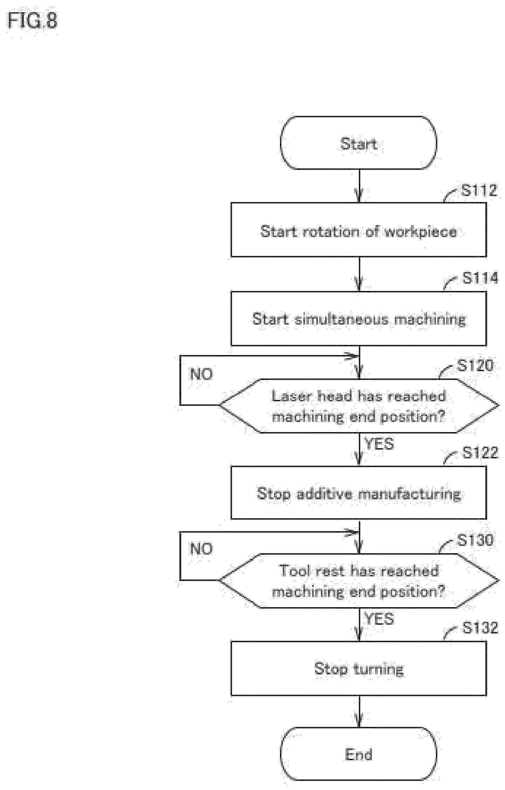

Next, a flow of controlling simultaneous machining will be described with reference to FIG. 8. FIG. 8 is a flowchart showing a flow of processing related to simultaneous machining shown in FIG. 4.

The processing shown in FIG. 8 is realized by the control unit 50 of the machining apparatus 100 executing the machining program 122 described above. In other aspects, part or all of the processing may be executed by circuit elements or other hardware.

In step S112, the control unit 50 controls the above-described drive unit 210 (see FIG. 6) to start rotation of the workpiece W.

In step S114, the control unit 50 starts simultaneous machining of additive manufacturing and turning. At this time, the control unit 50 drives and feeds the laser head 140 and a tool rest 31 in the Z-axis direction at the same speed such that the additive manufacturing point LP precedes the turning point TP. Also, the control unit 50 maintains the distance between the additive manufacturing point LP and the turning point TP at a predetermined distance ΔD1 (see FIG. 4). The distance ΔD1 may be set in advance or may be set by the user freely.

In step S120, the control unit 50 determines whether or not the laser head 140 has reached a machining end position. The machining end position for the laser head 140 is described, for example, in the machining program 122.

In the case of determining that the laser head 140 has reached the machining end position (YES in step S120), the control unit 50 switches the control to step S122. In the other case (NO in step S120), the control unit 50 executes the processing of step S120 again.

In step S122, the control unit 50 stops additive manufacturing performed by the laser head 140. In more detail, the control unit 50 controls the laser head 140 to stop supplying the powder material and irradiation with a laser beam.

In step S130, the control unit 50 determines whether or not the tool rest 31 has reached the machining end position. The machining end position for the tool rest 31 is described, for example, in the machining program 122.

In the case of determining that the tool rest 31 has reached the machining end position (YES in step S130), the control unit 50 switches the control to step S132. In the other case (NO in step S130), the control unit 50 executes the processing of step S130 again.

In step S132, the control unit 50 stops turning performed by the tool T. In more detail, the control unit 50 controls the workpiece spindle 22 to stop the rotation of the workpiece W and controls the driving of the tool rest 31 to move the tool T away from the workpiece W.

### <H. Variation 1>

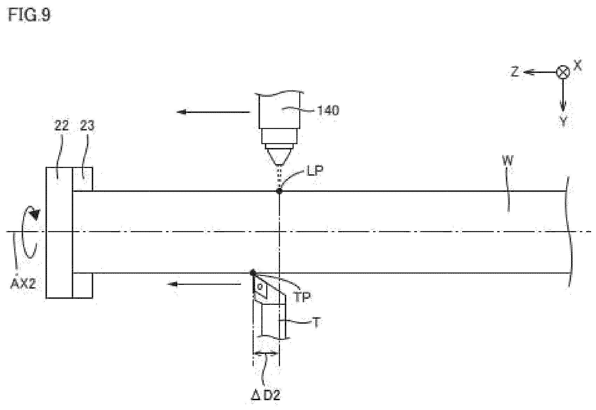

Next, variations of simultaneous machining shown in FIG. 4 will be described with reference to FIG. 9.

In an example shown in FIG. 4 above, the simultaneous machining is performed in a state in which the additive manufacturing point LP precedes the turning point TP. However, simultaneous machining may be performed in a state in which the turning point TP precedes the additive manufacturing point LP.

FIG. 9 is a diagram schematically showing a simultaneous machining mode according to Variation 1. In the example shown in FIG. 9, the machining apparatus 100 performs simultaneous machining in a state in which the turning point TP precedes the additive manufacturing point LP in the direction in which the laser head 140 and the tool T are fed. Also, in the example shown in FIG. 9, the turning point TP precedes the additive manufacturing point LP by a distance ΔD2.

The distance ΔD2 is determined to be greater than or equal to a distance by which the tool T or the laser head 140 moves in the Z-axis direction while the workpiece W is rotated half a turn. As one example, when the tool T or the laser head 140 moves by 0.2 mm in the feeding direction while the workpiece W makes one rotation, it is determined that the distance ΔD2 is 0.1 mm or more.

As a result, any portion on the workpiece W is machined in the order of "turning → additive manufacturing". Turning is performed first, which prepares the surface of the workpiece for additive manufacturing. As a result, the accuracy of additive manufacturing of the workpiece is improved.

### <I. Flow of controlling simultaneous machining according to Variation 1>

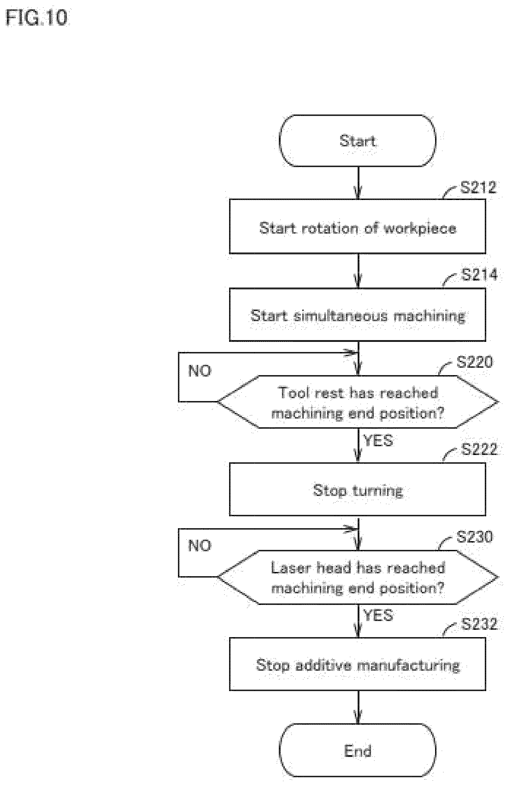

Next, a flow of controlling simultaneous machining according to Variation 1 will be described with reference to FIG. 10. FIG. 10 is a flowchart showing a flow of processing related to simultaneous machining shown in FIG. 9.

The processing shown in FIG. 10 is realized by the control unit 50 of the machining apparatus 100 executing the machining program 122 described above. In other aspects, part or all of the processing may be executed by circuit elements or other hardware.

In step S212, the control unit 50 controls the above-described drive unit 210 (see FIG. 6) to start rotation of the workpiece W.

In step S214, the control unit 50 starts simultaneous machining of additive manufacturing and turning. At this time, the control unit 50 drives and feeds the laser head 140 and the tool rest 31 in the Z-axis direction at the same speed such that the turning point TP precedes the additive manufacturing point LP. Also, the control unit 50 maintains the distance between the turning point TP and the additive manufacturing point LP at a predetermined distance ΔD2 (see FIG. 9). The distance ΔD2 may be set in advance or may be set by the user freely.

In step S220, the control unit 50 determines whether or not the tool rest 31 has reached the machining end position. The machining end position for the tool rest 31 is described, for example, in the machining program 122.

In the case of determining that the tool rest 31 has reached the machining end position (YES in step S220), the control unit 50 switches the control to step S222. In the other case (NO in step S220), the control unit 50 executes the processing of step S220 again.

In step S222, the control unit 50 stops turning performed by the tool T. In more detail, the control unit 50 controls the driving of the tool rest 31 to move the tool T away from the workpiece W.

In step S230, the control unit 50 determines whether or not the laser head 140 has reached a machining end position. The machining end position for the laser head 140 is described, for example, in the machining program 122.

In the case of determining that the laser head 140 has reached the machining end position (YES in step S230), the control unit 50 switches the control to step S232. In the other case (NO in step S230), the control unit 50 executes the processing of step S230 again.

In step S232, the control unit 50 stops additive manufacturing performed by the laser head 140. In more detail, the control unit 50 controls the laser head 140 to stop supplying the powder material and irradiation with a laser beam. Also, the control unit 50 causes the workpiece spindle 22 to stop rotation of the workpiece W.

### <J. Variation 2>

Next, simultaneous machining according to Variation 2 will be described.

In the example shown in FIG. 4 above, simultaneous machining is performed in a state in which the additive manufacturing point LP precedes the turning point TP. Further, in the example shown in FIG. 9 above, simultaneous machining is performed in a state in which the turning point TP precedes the additive manufacturing point LP. In contrast, in this variation, the machining apparatus 100 executes a combination of simultaneous machining in which additive manufacturing point LP precedes the turning point TP and simultaneous machining in which the turning point TP precedes the additive manufacturing point LP.

In more detail, first, the control unit 50 performs simultaneous machining in a state in which the turning point TP precedes the additive manufacturing point LP. Then, the control unit 50 returns the tool rest 31 to a machining start position based on the fact that the turning point TP has reached the machining end position. Thereafter, the control unit 50 performs simultaneous machining in a state in which the additive manufacturing point LP precedes the turning point TP.

Then, the control unit 50 returns the laser head 140 to the machining start position based on the fact that the additive manufacturing point LP has reached the machining end position. The control unit 50 then performs simultaneous machining in a state in which the turning point TP precedes the additive manufacturing point LP.

As described above, in this variation, the machining apparatus 100 alternately and repeatedly executes simultaneous machining in which the turning point TP precedes the additive manufacturing point LP and simultaneous machining in which the additive manufacturing point LP precedes the turning point TP.

### <K. Variation 3>

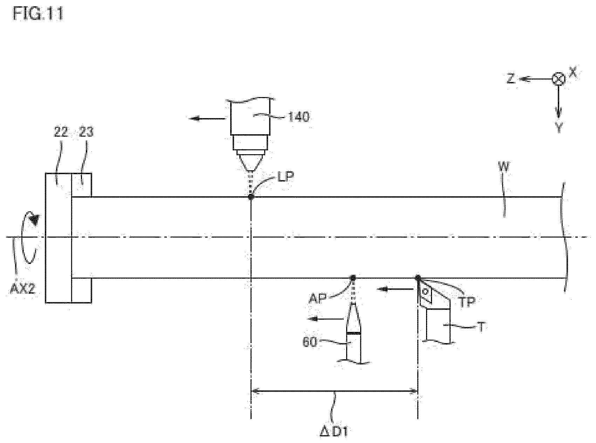

Next, simultaneous machining according to Variation 3 will be described with reference to FIG. 11. FIG. 11 is a diagram schematically showing a simultaneous machining mode according to Variation 3.

In this variation, the machining apparatus 100 further includes a discharge mechanism 60 for discharging a fluid onto the workpiece W. The machining apparatus 100 executes simultaneous machining while the fluid is being discharged onto the workpiece W. Thus, the machining apparatus 100 is capable of cooling the workpiece W whose temperature has increased through additive manufacturing.

Note that the fluid discharged by the discharge mechanism 60 may be air, a coolant, or any other type of gas or liquid. When a coolant is used to cool the workpiece W, the machining apparatus 100 can more efficiently lower the temperature of the workpiece W and can suppress a decrease in machining accuracy caused by temperature changes. On the other hand, when air is used to cool the workpiece W, it is possible to suppress a decrease in machining accuracy caused by liquid adhering to the surface of the workpiece.

The discharge mechanism 60 is configured to be driven in the Z-axis direction. As one example, the discharge mechanism 60 is provided in the tool rest 31 and driven and fed together with the tool rest 31. As another example, a drive unit (not shown) of the discharge mechanism 60 is provided in another machining apparatus 100 separately from the drive unit 240 (see FIG. 6) of the tool rest 31. The drive unit of the discharge mechanism 60 is configured to be capable of driving the discharge mechanism 60 at least in the Z-axis direction.

The machining apparatus 100 executes simultaneous machining while feeding the discharge mechanism 60, the laser head 140, and the tool T to one side in the Z-axis direction. At this time, simultaneous machining is performed in a state in which the additive manufacturing point LP precedes a discharge point AP of the fluid onto the workpiece W, and the discharge point AP precedes the turning point TP. As a result, any portion on the workpiece W is machined in the order of "additive manufacturing → fluid discharge → turning".

This allows the machining apparatus 100 to more reliably lower the temperature of the workpiece W and then perform turning. As a result, the machining apparatus 100 is capable of suppressing wear of the tool T due to heat. The machining apparatus 100 is capable of performing turning when the workpiece W is not expanded, and can avoid a decrease in machining accuracy.

The embodiments disclosed herein are intended to be considered to be illustrative in all respects and not restrictive. The scope of the present invention is indicated by the claims rather than the above description, and it is intended that equivalent meanings and all changes within the scope of the claims are included.

### List of Reference Numerals

- 11: Bed
- 16: Tool rest
- 18: Turret
- 22: Workpiece spindle
- 23: Chuck mechanism
- 25: Tailstock
- 30: Tool spindle
- 31: Tool rest
- 50: Control unit
- 60: Discharge mechanism
- 100: Machining apparatus
- 101: Control circuit
- 102: ROM
- 103: RAM
- 104: Communication Interface
- 109: Internal bus
- 120: Auxiliary storage device
- 122: Machining program
- 130: Cover body
- 140: Laser head
- 142: Head body
- 146: Laser nozzle
- 200: Operation panel
- 210: Drive unit
- 211C: Motor driver
- 212C: Motor
- 220: Drive unit
- 221Z: Motor driver
- 222Z: Motor
- 230A: Drive unit
- 230B: Drive unit
- 231A: Motor driver
- 231B: Motor driver
- 231X: Motor driver
- 231Y: Motor driver
- 231Z: Motor driver
- 232A: Motor
- 232B: Motor
- 232X: Motor
- 232Y: Motor
- 232Z: Motor
- 240: Drive unit
- 241C: Motor driver
- 241Y: Motor driver
- 241Z: Motor driver
- 242C: Motor
- 242Y: Motor
- 242Z: Motor
- AP: Discharge point
- AR: Machining area
- AX1: Axis
- AX2: Axis
- AX3: Axis
- CP: Rotation center
- DR: Door
- LP: Additive manufacturing point
- LS: Laser beam
- MP: Molten pool
- PM: Powder material
- SL: Layer
- T: Tool
- TP: Turning point
- W: Workpiece

## Claims

1. A machining method for machining a workpiece by a machining apparatus,
the machining apparatus including
a workpiece spindle configured to drive the workpiece to rotate,
a laser head configured to supply a powder material to the workpiece and perform additive manufacturing by irradiating the workpiece with a laser beam, and
a tool rest configured to hold a tool,
the machining method comprising:
a step of causing the workpiece spindle to rotate the workpiece; and
a step of performing simultaneous machining in which additive manufacturing performed by the laser head and turning performed by the tool are performed simultaneously on the rotating workpiece,
wherein the simultaneous machining is performed in a state in which an additive manufacturing point, at which the laser head performs additive manufacturing on the workpiece, and a turning point, at which the tool performs turning on the workpiece, are separated by a predetermined distance or more in a rotation axis direction of the workpiece spindle while the laser head and the tool are fed to one side in the rotation axis direction.

2. The machining method according to claim 1,
wherein the simultaneous machining is performed in a state in which the additive manufacturing point precedes the turning point on the one side.

3. The machining method according to claim 1,
wherein the simultaneous machining is performed in a state in which the turning point precedes the additive manufacturing point on the one side.

4. The machining method according to any one of claims 1 to 3,
wherein the additive manufacturing point, a rotation center of the workpiece, and the turning point are arranged in the order of the additive manufacturing point, the rotation center of the workpiece, and the turning point in the stated order when viewed from the rotation axis direction.

5. The machining method according to claim 1 or 2,
the machining apparatus further including a discharge mechanism configured to discharge a fluid onto the workpiece,
wherein the simultaneous machining is performed while the fluid is being discharged onto the workpiece.

6. The machining method according to claim 5,
wherein the fluid is air or a coolant.

7. The machining method according to claim 5,
wherein the simultaneous machining is performed in a state in which the additive manufacturing point precedes a discharge point of the fluid onto the workpiece on the one side, and the discharge point precedes the turning point on the one side.

8. A machining apparatus for machining a workpiece, comprising:
a workpiece spindle configured to drive the workpiece to rotate,
a laser head configured to supply a powder material to the workpiece and perform additive manufacturing by irradiating the workpiece with a laser beam,
a tool rest configured to hold a tool, and
a control unit configured to control the machining apparatus,
wherein the control unit is further configured to execute
processing of causing the workpiece spindle to rotate the workpiece, and
processing of performing simultaneous machining in which additive manufacturing performed by the laser head and turning performed by the tool are performed simultaneously on the rotating workpiece, and
the simultaneous machining is performed in a state in which an additive manufacturing point, at which the laser head performs additive manufacturing on the workpiece, and a turning point, at which the tool performs turning on the workpiece, are separated by a predetermined distance or more in a rotation axis direction of the workpiece spindle while the laser head and the tool are fed to one side in the rotation axis direction.

9. A machining program to be executed by a machining apparatus for machining a workpiece,
the machining apparatus including
a workpiece spindle configured to drive the workpiece to rotate,
a laser head configured to supply a powder material to the workpiece and perform additive manufacturing by irradiating the workpiece with a laser beam, and
a tool rest configured to hold a tool,
wherein the machining program causes the machining apparatus to execute
a step of causing the workpiece spindle to rotate the workpiece, and
a step of performing simultaneous machining in which additive manufacturing performed by the laser head and turning performed by the tool are performed simultaneously on the rotating workpiece, and
the simultaneous machining is performed in a state in which an additive manufacturing point, at which the laser head performs additive manufacturing on the workpiece, and a turning point, at which the tool performs turning on the workpiece, are separated by a predetermined distance or more in a rotation axis direction of the workpiece spindle while the laser head and the tool are fed to one side in the rotation axis direction.
